# EUROPEAN PATENT APPLICATION

(11) **EP 4 583 201 A1**
(43) Date of publication of application: **09.07.2025**
(21) Application number: 23927124.0
(22) Date of filing: 03.11.2023
(51) Int. Cl.: H01M 4/36

(54) **NEGATIVE ELECTRODE ACTIVE MATERIAL AND PREPARATION METHOD THEREFOR, NEGATIVE ELECTRODE SHEET, BATTERY, AND ELECTRIC DEVICE**

(30) Priority: 13.03.2023 CN 202310238346
(71) Applicant: Contemporary Amperex Technology (Hong Kong) Limited, Central (HK)
(72) Inventor: LI, Yuan, Ningde, Fujian 352100 (CN); WEN, Haonan, Ningde, Fujian 352100 (CN); WANG, Jiazheng, Ningde, Fujian 352100 (CN)
(74) Representative: von Tietzen und Hennig, Nikolaus
(86) International application number: PCT/CN2023/129567
(87) International publication number: WO 2024/187783

(57) **Abstract**

This application discloses a negative electrode active material and a preparation method therefor, a negative electrode plate, a battery, and an electrical device. The negative electrode active material includes a carbon core; a porous carbon skeleton layer, having an accommodation space inside, where the carbon core is located in the accommodation space; a carbon cladding layer, where the carbon cladding layer is cladded on at least a part of an outer surface of the porous carbon skeleton layer; and a wave absorbing material and silicon-based particles, where the wave absorbing material and the silicon-based particles are respectively and independently distributed in a region in which the carbon core is located and a region in which the porous carbon skeleton layer is located.

## Description

### TECHNICAL FIELD

This application relates to the field of batteries, and specifically, to a negative electrode active material and a preparation method therefor, a negative electrode plate, a battery, and an electrical device.

### BACKGROUND

Lithium-ion batteries have features such as being green, environmental friendly, high-energy, and low-carbon, and are not only used in energy storage power systems such as water power stations, fossil-fuel power stations, wind power stations, and solar power stations, but also widely used in electric transportation tools such as electric bicycles, electric motorcycles, and electric vehicles, and a plurality of fields such as military equipment and aerospace. With the development of the current society, people have increasingly high requirements on lithium-ion batteries, for example, require high energy density. A negative electrode is an important component of a lithium-ion battery. Selection of a high-capacity negative electrode active material helps improve energy density of a battery. For example, a silicon-based negative electrode active material may be selected to improve energy density of a battery.

### SUMMARY

In view of the technical problems in the Background, this application provides a negative electrode active material, to improve energy density and cycle performance of a battery.

To achieve the foregoing objective, according to a first aspect of this application, a negative electrode active material is provided, including: a carbon core; a porous carbon skeleton layer, having an accommodation space inside, where the carbon core is located in the accommodation space; a carbon cladding layer, where the carbon cladding layer is cladded on at least a part of an outer surface of the porous carbon skeleton layer; and a wave absorbing material and silicon-based particles, where the wave absorbing material and the silicon-based particles are respectively and independently distributed in a region in which the carbon core is located and a region in which the porous carbon skeleton layer is located.

Compared with the related art, the negative electrode active material of this application has at least the following beneficial effects: 1. The negative electrode active material features both high conductivity and stability of a carbon material and a high capacity of a silicon material, and use of the negative electrode active material in a negative electrode plate helps improve a capacity and conductivity of a negative electrode, and improve energy density and electrical performance of a battery. 2. The silicon-based particles are distributed in the carbon core and the porous carbon skeleton layer, that is, the silicon-based particles are distributed in the outermost carbon cladding layer, so that volume expansion of silicon during a charge and discharge cycle can be effectively limited by using a porous structure of the porous carbon skeleton layer and the outermost carbon cladding layer, to improve structural stability of the negative electrode active material. Therefore, possible volume expansion of the negative electrode plate and the battery during cycling can be effectively alleviated, and cycle performance of the battery is improved. 3. A preparation process is controllable, and directional distribution of the silicon-based particles in the regions in which the carbon core and the porous carbon skeleton layer are located can be implemented by using the wave absorbing material.

In some embodiments of this application, based on a total mass of the wave absorbing material, a content of the wave absorbing material distributed in the porous carbon skeleton layer is not less than 90wt%, and a content of the wave absorbing material distributed in the region in which the carbon core is located is not greater than 10wt%. Making a distribution amount of the wave absorbing material within a given range can further cause more silicon to be deeply deposited in pores of the porous carbon skeleton layer. Volume expansion of the silicon-based particles is effectively limited by using a pore structure of the porous carbon skeleton in combination with the carbon cladding layer, to improve the cycle performance.

In some embodiments of this application, based on a mass of the porous carbon skeleton layer, a content of the wave absorbing material ranges from 0.5wt% to 15wt%. An addition amount of the wave absorbing material is controlled within a given range, which helps deposit more silicon in the region in which the porous carbon skeleton layer and the carbon core are located without occupying too much internal space of the negative electrode active material, and helps obtain a large silicon deposition amount while taking both a gram capacity and kinetic performance of the negative electrode active material into account.

In some embodiments of this application, based on a mass of the negative electrode active material, a content of the wave absorbing material is not greater than 10wt%, and optionally, ranges from 3wt% to 8wt%. An addition amount of the wave absorbing material is controlled within a given range, which helps deposit more silicon in the region in which the porous carbon skeleton layer and the carbon core are located without occupying too much internal space of the negative electrode active material, and helps obtain a large silicon deposition amount while taking both a gram capacity and kinetic performance of the negative electrode active material into account.

In some embodiments of this application, the wave absorbing material satisfies at least one of the following conditions: a wave absorbing range is 5.2 GHz to 15.9 GHz, a wave absorbing bandwidth ranges from 8.4 GHz to 10.7 GHz, and a particle size ranges from 20 nm to 500 nm. An addition amount of the wave absorbing material is controlled within a given range, which helps deposit more silicon in the region in which the porous carbon skeleton layer and the carbon core are located without occupying too much internal space of the negative electrode active material, and helps obtain a large silicon deposition amount while taking both a gram capacity and kinetic performance of the negative electrode active material into account.

In some embodiments of this application, the wave absorbing material includes one or more of a metal elementary substance, an alloy, a metal oxide, a composite metal oxide, a carbide, or a sulfide, and optionally, the wave absorbing material includes one or more of an iron elementary substance, an iron-containing alloy, and an iron-containing oxide. Selection of the wave absorbing material within the given range helps implement precise heating at a particular location, and facilitates even and directional deposition of more silicon inside the negative electrode active material, especially, in the pores of the multi-layered carbon skeleton layer.

In some embodiments of this application, the silicon-based particles include one or more of a silicon elementary substance, a silicon oxide material, and a silicon carbon material. The silicon-based particles within the given range have a high capacity, so that the overall gram capacity of the negative electrode active material can be improved.

In some embodiments of this application, based on the mass of the negative electrode active material, a content of the silicon-based particles ranges from 30wt% to 70wt%, and optionally, from 30wt% to 50wt%. The content of the silicon-based particles is controlled within the given range, so that both the gram capacity and cycle stability of the negative electrode active material can be taken into account.

In some embodiments of this application, a porosity of the porous carbon skeleton layer ranges from 40% to 70%. The porosity of the porous carbon skeleton layer is controlled within the given range, so that the gram capacity and the cycle stability of the negative electrode active material can be improved while taking overall strength of the negative electrode active material into account.

In some embodiments of this application, a pore diameter of the porous carbon skeleton layer ranges from 1 nm to 50 nm. Controlling the pore diameter of the porous carbon skeleton layer within the given range can further help improve both the gram capacity and cycle structure stability of the negative electrode active material.

In some embodiments of this application, the negative electrode active material satisfies at least one of the following conditions: a particle size of the carbon core ranges from 1 µm to 5 µm; a thickness of the carbon cladding layer is not greater than 1 µm, optionally, is not greater than 0.2 µm, further optionally, is not greater than 0.1 µm, and still further optionally, ranges from 0.05 µm to 0.08 µm; and a Dv50 particle size of the negative electrode active material is not greater than 10 µm, and a Dv90 particle size of the negative electrode active material is not greater than 20 µm.

In some embodiments of this application, the carbon core includes one or more of graphite, porous carbon, and mesophase carbon microspheres, and optionally, the porous carbon includes hard carbon.

In some embodiments of this application, carbon precursor materials used to form the porous carbon skeleton layer and the carbon cladding layer respectively and independently include one or more of bitumen, a resin, a soluble starch, sucrose, glucose, and polyacrylate.

In some embodiments of this application, the negative electrode active material further includes a carbon core cladding layer, where the carbon core cladding layer is cladded on at least a part of an outer surface of the carbon core and located in the accommodation space, and the wave absorbing material is distributed in the carbon core cladding layer. Satisfying the given conditions can further facilitate deposition of silicon inside the entire negative electrode active material, reduce a content of silicon on a surface of the negative electrode active material, and improve a limiting effect of the negative electrode active material on volume expansion of the silicon-based particles during a charge and discharge cycle.

In some embodiments of this application, a mass fraction of the wave absorbing material in the carbon core cladding layer is greater than a mass fraction of the wave absorbing material in the porous carbon skeleton layer. Satisfying the given condition can further facilitate deposition of more silicon inside the porous carbon skeleton layer, so that a silicon deposition amount on a side close to the carbon core is greater than a silicon deposition amount on a side close to the carbon cladding layer in the porous carbon skeleton layer.

In some embodiments of this application, a thickness of the carbon core cladding layer is not greater than 1 µm, optionally, ranges from 0.3 µm to 1 µm, and further optionally, ranges from 0.3 µm to 0.5 µm. The thickness of the carbon core cladding layer is controlled within the given range, so that deposition of more silicon inside the negative electrode active material is facilitated, and the cycle performance is improved, based on which the gram capacity of the entire negative electrode active material can be further taken into account.

In some embodiments of this application, a resistivity of the negative electrode active material at room temperature and a pressure of 4 Mpa ranges from 100 Ω·cm to 10000 Ω·cm, and optionally, ranges from 100 Ω·cm to 300 Ω·cm. The resistivity of the negative electrode active material is controlled within the given range, so that a volume effect and the cycle performance of the negative electrode active material are improved, based on which the kinetic performance can be further taken into account.

According to a second aspect of this application, a preparation method for the negative electrode active material according to the first aspect of this application is provided. The method includes: mixing a carbon core material, a pore-forming agent, a carbon skeleton precursor material, and a solvent, to obtain a first mixed liquid; mixing a wave absorbing material with the first mixed liquid, to obtain a second mixed liquid; performing spray forming and fluidized drying treatment on the second mixed liquid, to obtain composite particles; carbonizing and activating the composite particle, to obtain skeleton particles of a porous carbon skeleton layer covering a carbon core; performing microwave heating on the skeleton particles, and introducing a gas-phase silicon source to deposit silicon, to obtain precursor particles; and cladding at least a part of an outer surface of the precursor particles with a carbon cladding layer, to obtain the negative electrode active material.

Compared with the related art, the preparation method for a negative electrode active material in this application has at least the following beneficial effects: A preparation process is controllable, and precise heating may be performed by using the wave absorbing material and through microwave heating, to implement directional distribution of silicon, and obtain the negative electrode active material of an expected structure. In addition, the method further helps reduce a heating temperature and heating duration in a preparation process, improve production efficiency, and reduce costs. In addition, the prepared negative electrode active material can effectively limit volume expansion of silicon, to improve structural stability of the negative electrode active material during cycling.

In some embodiments of this application, before the first mixed liquid is prepared, the method further includes: cladding at least a part of an outer surface of the carbon core material with a carbon core cladding layer.

In some embodiments of this application, the pore-forming agent includes one or more of sodium chloride, potassium chloride, zinc chloride, sodium carbonate, potassium carbonate, zinc carbonate, zinc acetate, and ammonium ethanoate.

In some embodiments of this application, a sum of a mass fraction of the pore-forming agent and a mass fraction of the carbon skeleton precursor material in the first mixed liquid ranges from 10wt% to 70wt%.

In some embodiments of this application, a mass ratio of the pore-forming agent to the carbon skeleton precursor material is (10 to 1):(1 to 100), optionally, is (10 to 1):(2 to 10), and further optionally, is (10 to 1):(2 to 5). Controlling a dosage of the pore-forming agent within the given range can further help obtain the porous carbon skeleton layer having an expected porosity and a micro-mesoporous porous structure.

According to a third aspect of this application, a negative electrode plate is provided, including the negative electrode active material according to the first aspect of this application, and/or a negative electrode active material prepared by using the preparation method for a negative electrode active material according to the second aspect of this application.

According to a fourth aspect of this application, a battery is provided, including the negative electrode active material according to the first aspect of this application, and/or a negative electrode active material prepared by using the preparation method for a negative electrode active material according to the second aspect of this application, and/or the negative electrode plate according to the third aspect of this application.

According to a fifth aspect of this application, an electrical device is provided, including the negative electrode active material according to the first aspect of this application, and/or a negative electrode active material prepared by using the preparation method for a negative electrode active material according to the second aspect of this application, and/or the negative electrode plate according to the third aspect of this application, and/or the battery according to the fourth aspect of this application.

Some of the additional aspects and advantages of this application will be provided in the following description, and some will become apparent from the following description, or be learned by the practice of this application.

### BRIEF DESCRIPTION OF THE DRAWINGS

The foregoing and/or additional aspects and advantages of this application will become apparent and comprehensible in the following descriptions of embodiments with reference to the following accompanying drawings.
FIG. 1 is a schematic structural diagram of a cross section of a negative electrode active material according to an embodiment of this application;
FIG. 2 is a schematic structural diagram of a cross section of a negative electrode active material according to another embodiment of this application;
FIG. 3 is a schematic structural diagram of a battery according to an embodiment of this application;
FIG. 4 is a schematic structural diagram of a battery module according to an embodiment of this application;
FIG. 5 is a schematic structural diagram of a battery pack according to an embodiment of this application;
FIG. 6 is an exploded view of a battery pack according to an embodiment of this application;
FIG. 7 is a schematic diagram of an implementation of an electrical device using a battery as a power source according to an embodiment of this application;
FIG. 8 is an XRD pattern of a negative electrode active material prepared according to Example 1 of this application; and
FIG. 9 is an XRD pattern of a negative electrode active material prepared according to Comparative Example 1 of this application.

### Reference numerals:

10-carbon core; 11-carbon core cladding layer; 20-porous carbon skeleton layer; 30-carbon cladding layer;
1-secondary battery; 2-battery module; 3-battery pack; 4-upper box body; and 5-lower box body.

### DETAILED DESCRIPTION

The following describes this application in more detail with reference to specific implementations. It should be understood that the specific implementations are merely intended to illustrate this application but not intended to limit the scope of this application.

Reference to "an embodiment" in this application means that a particular feature, structure or characteristic described in combination with the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiments described in this application may be combined with another embodiment.

A "range" disclosed in this application is defined in a form of a lower limit and/or an upper limit. A given range is defined by selection of a lower limit and/or an upper limit, and the selected lower limit and/or upper limit define a boundary of the particular range. A range defined in this manner may be inclusive or exclusive of end values, and may be arbitrarily combined, that is, any lower limit may be combined with any upper limit to form a range that is not clearly recorded, any lower limit may be combined with another lower limit to form a range that is not clearly recorded, and similarly, any upper limit may be combined with any other upper limit to form a range that is not clearly recorded. In addition, each separately disclosed point or single numerical value may be used as a lower limit or an upper limit to combine with any other point or other single numerical value or with any other lower or upper limit to form a range that is not clearly recorded. For example, if a range of being not greater than 20 is listed for a particular parameter, it is understood that a range from 2 to 18, a range from 5 to 15, or the like that is not greater than 20 is also contemplated. In addition, if minimum range values of 1 and 5 are listed, and maximum range values of 10 and 30 are listed, the following ranges are all contemplated: 1 to 10, 1 to 30, 5 to 10, and 5 to 30. In this application, unless otherwise specified, a numerical range such as "30 to 100" represents an abbreviated representation of any combination of real numbers between 30 to 100, where both 30 and 100 are real numbers. For example, a numerical range "1 to 30" indicates that all real numbers in "1 to 30" have been listed in this specification, and "1 to 30" is only a shortened representation of these numerical combinations.

Unless otherwise specified, all embodiments and optional embodiments of this application may be combined with each other to form new technical solutions, and such technical solutions should be considered to be included in the disclosure of this application.

Unless otherwise specified, all technical features and optional technical features of this application may be combined with each other to form new technical solutions, and such technical solutions should be considered to be included in the disclosure of this application.

Unless otherwise specified, all the steps in this application can be performed sequentially or randomly, and preferably, performed sequentially. For example, the phrase "the method includes step S1 and step S2" means that the method may include step S1 and step S2 performed sequentially, or may include step S1 and step S2 performed sequentially. For example, the phrase "the method may further include step S3" means that step S3 may be added to the method in any order. For example, the method may include step S1, step S2, and step S3, or may include step S1, step S3, and step S2, or may include step S3, step S1, and step S2.

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised. In addition, in this application, the term "a plurality of" or "a plurality of types of" indicates two or more.

Unless otherwise specified, the term "and/or" in this application describes only an association relationship for describing associated objects and represents that three relationships may exist. For example, A and/or B may represent the following three cases: Only A exists, both A and B exist, and only B exists. In addition, in this specification, the character "/" usually indicates an "or" relationship between the associated objects.

Unless otherwise defined, all technical and scientific terms used in this application have same meanings as commonly understood by a person skilled in the technical field of this application. The terms used in this application are merely for an objective of describing specific embodiments, and are not intended to limit this application. The terms "include", "include" and any variations thereof in the specification and claims of this application and in the above descriptions of the accompanying drawings are intended to cover non-exclusive inclusion. Unless otherwise specified, the terms used in this application have well known meanings as commonly understood by a person skilled in the art. Unless otherwise specified, numerical values of parameters mentioned in this application may be measured by using various measurement methods commonly used in the art (for example, testing may be performed according to a method provided in the embodiments of this application).

Currently, as demands in a power battery market gradually grow, requirements for energy density of power batteries are increasingly high. However, a silicon-based material with high energy density has severe volume expansion during cycling. Especially, when silicon nanoparticles are deeply embedded in a lithium battery, volume expansion may reach 300%. An expansion effect of silicon usually can be limited effectively by compounding carbon materials of different structures and dimensions. However, a large amount of silicon is free outside a carbon structure. For example, there is a process in which a silicon dispersant is added dropwise to a vigorously stirred metal oxide-grapheme dispersant, a metal oxide-grapheme-silicon composite material is obtained through suction filtration, and then a porous grapheme silicon negative material is obtained in combination with acidic etching and a carbothermic reaction. This process has high raw material costs, and it is difficult to deposit silicon inside an active material. Silicon distributed on an outer surface directly increases conduction resistivity of an electron between particles. In addition, during cycling, expansion caused by silicon exposed on a surface of a material may also affect a cycle life.

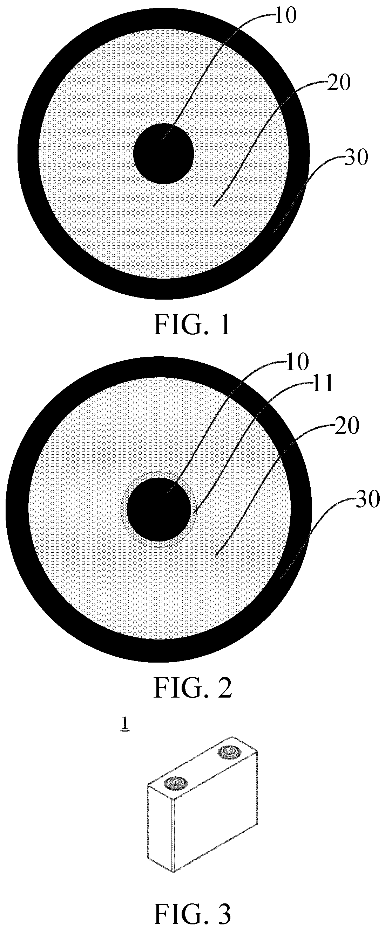

In view of this, according to a first aspect of this application, a negative electrode active material is provided. Referring to FIG. 1, it is understood that the negative electrode active material includes a carbon core 10, a porous carbon skeleton layer 20, a carbon cladding layer 30, as well as a wave absorbing material (not shown) and silicon-based particles (not shown). The porous carbon skeleton layer 20 has an accommodation space (not shown) inside, where the accommodation space can accommodate the carbon core 10, and the carbon core 10 is located in the accommodation space. The carbon cladding layer 30 is cladded on at least a part of an outer surface of the porous carbon skeleton layer 20. The wave absorbing material and the silicon-based particles are respectively and independently distributed in a region in which the carbon core 10 is located and a region in which the porous carbon skeleton layer 20 is located. For example, the wave absorbing material and the silicon-based particles may be respectively and independently partially or completely distributed in skeleton pores of the porous carbon skeleton layer 20.

According to this embodiment of this application, a carbon material and the silicon-based particle are combined, and the foregoing structure is controlled. Therefore, in one aspect, negative electrode active material features both high conductivity and stability of a carbon material and a high capacity of a silicon material, and use of the negative electrode active material in a negative electrode plate helps improve a capacity and conductivity of a negative electrode, and improve energy density and electrical performance of a battery. In another aspect, in the negative electrode active material, the silicon-based particles are distributed in the carbon core and the porous carbon skeleton layer, that is, the silicon-based particles are distributed in the outermost carbon cladding layer, so that volume expansion of silicon during a charge and discharge cycle can be effectively limited by using a porous structure of the porous carbon skeleton layer and the outermost carbon cladding layer, to improve structural stability of the negative electrode active material. Therefore, possible volume expansion of the negative electrode plate and the battery during cycling can be effectively alleviated, and cycle performance of the battery is improved. In still another aspect, a preparation process of the negative electrode active material is controllable, and directional distribution of the silicon-based particles in the regions in which the carbon core and the porous carbon skeleton layer are located can be implemented by using the wave absorbing material.

Further, on the basis that the negative electrode active material in the first aspect of this application satisfies the foregoing conditions, a distribution location, an addition amount, a wave absorbing range, and the like of the wave absorbing material, selection and a dosage of the silicon-based particles, a structure of the porous carbon skeleton layer, and selection of the carbon core in the negative electrode active material may be further controlled to further improve performance, which includes, but is not limited to, a capacity, conductivity, cycle stability, and the like, of the negative electrode active material. That is, on the basis that the foregoing conditions are satisfied, optionally, one or more of the following conditions are satisfied.

In some embodiments of this application, a content of the wave absorbing material distributed in the porous carbon skeleton layer 20 is greater than a content of the wave absorbing material distributed in the region in which the carbon core 10 is located. Reasons for which a large amount of silicon free outside a carbon structure or exposed on a surface of a silicon-carbon composite negative electrode active material exists in the silicon-carbon composite negative electrode active material include: A high temperature is required in a conventional method for performing heat treatment on a silicon-carbon composite material, sintering duration is long, a large amount of energy needs to be consumed, and temperatures in different regions of the material cannot be accurately controlled. In this conventional heat treatment process mode, it is very difficult to control a status of a finished product of the silicon-carbon composite material. Not only a large amount of energy needs to be consumed, but also it is difficult for silicon in the silicon-carbon composite material to enter into a carbon skeleton, resulting in many silicon grains existing on the surface of the material. This easily causes a serious expansion problem during cycling of the battery, directly affects stability of a structure of the silicon-carbon composite material, and finally affects cycle performance. To overcome a negative impact of conventional heat treatment on the silicon-carbon composite material, a wave absorbing material is introduced into the silicon-carbon composite material, so that a wave band of the wave absorbing material may be coupled to a basic fine structure of the material to generate heat, to precisely heat a particular location of the material, and advantages, such as a high temperature rising speed, high energy utilization, high heating efficiency, safety, hygiene, and non-pollution, are achieved. In this embodiment of this application, more wave absorbing material is distributed in the porous carbon skeleton layer, to enable more silicon to be deeply deposited in pores of the porous carbon skeleton layer through self-heating, non-gradient overall heating, and a high temperature rising speed of the wave absorbing material in a process of preparing the negative electrode active material, that is, enable silicon to enter into the negative electrode active material. Therefore, a content of silicon on a surface of the negative electrode active material is significantly reduced, and volume expansion of silicon can be effectively limited, to help maintain structural stability of the silicon-based particles in long-term cycling. In addition, volume expansion of the internal silicon-based particles can further be limited by using the carbon cladding layer, to improve the cycle performance.

In some embodiments of this application, based on a total mass of the wave absorbing material, a content of the wave absorbing material distributed in the porous carbon skeleton layer 20 may be not less than 90wt% (for example, may be 91wt%, 92wt%, 93wt%, 94wt%, 95wt%, 96wt%, 97wt%, 98wt%, 99wt%, or the like, or may be a range including any of the foregoing values), and a content of the wave absorbing material distributed in the region in which the carbon core 10 is located may be not greater than 10wt% (for example, may be 9wt%, 8wt%, 7wt%, 6wt%, 5wt%, 4wt%, 3wt%, 2wt%, 1wt%, or the like, or may be a range including any of the foregoing values). Whether a wave absorbing material exists in the negative electrode active material may be determined with reference to an intensity signal of the negative electrode active material in an electromagnetic wave environment. For example, for a negative electrode active material containing silicon, the silicon may be first etched away, and then whether the wave absorbing material exists may be determined. A crystal form or a type of the wave absorbing material may be determined through an XRD test, and types and contents of micro-area component elements in a cross sectional region of the negative electrode active material may be analyzed through an energy dispersive spectrometer (EDS), to determine the distribution of the wave absorbing material in different regions, and analyze mass fractions of the wave absorbing material in different regions. In this embodiment of this application, the distribution of the wave absorbing material is enabled to satisfy the foregoing given conditions, so that more silicon is deeply deposited in pores of the porous carbon skeleton layer. Volume expansion of the silicon-based particles is effectively limited by using a pore structure of the porous carbon skeleton in combination with the carbon cladding layer, to improve the cycle performance.

In some embodiments of this application, based on a mass of the porous carbon skeleton layer 20, a content of the wave absorbing material may range from 0.5wt% to 15wt%, for example, may be 1wt%, 2wt%, 3wt%, 4wt%, 5wt%, 6wt%, 7wt%, 8wt%, 9wt%, 10wt%, 11wt%, 12wt%, 13wt%, 14wt%, or the like or may be a range including any of the foregoing values. The content of the wave absorbing material in the porous carbon skeleton layer may be obtained by analyzing types and contents of component elements in a region of the porous carbon skeleton layer in a cross section of the negative electrode active material through an XRD test and an energy dispersive spectrometer (EDS). As the content of the wave absorbing material increases, a risk that the wave absorbing material agglomerates into a large particle in the porous carbon skeleton layer also increases, which is prone to reducing dispersion evenness of the wave absorbing material, resulting in significant weakening of a wave absorbing effect. A small amount of wave absorbing material is covered inside a structure of the negative electrode active material to achieve an effect of precise heating and controlling of deposition of silicon. An addition amount of the wave absorbing material is controlled within a given range, which helps deposit more silicon in the regions in which the porous carbon skeleton layer and the carbon core are located without occupying too much internal space of the negative electrode active material, and helps obtain a large silicon deposition amount while taking both a gram capacity and kinetic performance of the negative electrode active material into account.

In some embodiments of this application, based on a mass of the negative electrode active material, a content of the wave absorbing material may be not greater than 10wt%, for example, may be 0.5wt%, 1wt%, 2wt%, 3wt%, 4wt%, 5wt%, 6wt%, 7wt%, 8wt%, 9wt%, or the like, or may be a range including any of the foregoing values. An addition amount of the wave absorbing material is controlled within a given range, which helps deposit more silicon in the region in which the porous carbon skeleton layer and the carbon core are located without occupying too much internal space of the negative electrode active material, and helps obtain a large silicon deposition amount while taking both a gram capacity and kinetic performance of the negative electrode active material into account. Optionally, based on the mass of the negative electrode active material, the content of the wave absorbing material may range from 3wt% to 8wt%. The addition amount of the wave absorbing material is controlled within the given range, so that on the basis that a large silicon deposition amount is obtained, the wave absorbing material can be further prevented from occupying too much internal space of the negative electrode active material, and the gram capacity and the kinetic performance of the negative electrode active material are improved.

In some embodiments of this application, a wave absorbing range of the wave absorbing material may be 5.2 GHz to 15.9 GHz, for example, may be 6 GHz, 7 GHz, 8 GHz, 9 GHz, 10 GHz, 11 GHz, 12 GHz, 13 GHz, 14 GHz, 15 GHz, or the like, or may be a range including any of the foregoing values. The negative electrode active material (where desiliconization may be first performed when silicon is deposited) may be placed in a particular variable-frequency electromagnetic wave environment to collect electromagnetic-wave intensity signals, to test an absorbing frequency band range of the wave absorbing material. Optionally, the wave absorbing range of the wave absorbing material may be 6 GHz to 10 GHz. Selecting the wave absorbing range within the given range helps improve efficiency and an effect of heating the wave absorbing material within a particular wave band range, improve production efficiency, and reduce production costs.

In some embodiments of this application, a wave absorbing bandwidth of the wave absorbing material may be 8.4 GHz to 10.7 GHz, for example, may be 8.5 GHz, 9 GHz, 9.5 GHz, 10 GHz, 10.5 GHz, or the like, or may be a range including any of the foregoing values. The wave absorbing bandwidth is a frequency bandwidth, that is, a frequency difference between a maximum absorbing wavelength and a minimum absorbing wavelength.

In some embodiments of this application, a particle size of the wave absorbing material may range 20 nm to 500 nm, for example, may be 50 nm, 100 nm, 150 nm, 200 nm, 250 nm, 300 nm, 350 nm, 400 nm, 500 nm, or the like, or may be a range including any of the foregoing values. The particle size of the wave absorbing material may be measured by using a transmission electron microscope. For example, using a Fe-based wave absorbing material as an example, the wave absorbing material is in a form of solid particles, and a particle size of the wave absorbing material may be observed by using a high-power transmission electron microscope. The wave absorbing material is dark particles in a field of view. An average particle size of the particles in the field of view is calculated. During actual operation, an average value may be obtained through a plurality of measurements. Use of the wave absorbing material with a small particle size helps increase a quantity of particles of the wave absorbing material and increase surface activity of the wave absorbing material, and further helps even dispersion of the wave absorbing material, so that the wave absorbing material may facilitate conversion of electromagnetic energy into thermal energy under radiation of a microwave field, to implement precise heating at a particular location, further facilitate even and directional deposition of more silicon inside the negative electrode active material, especially, in the pores of the multi-layered carbon skeleton layer, and help reduce adverse impact caused by an excessively large particle size of the wave absorbing material on even dispersion of the wave absorbing material in the porous carbon skeleton layer, and adverse impact on even distribution of the silicon-based particles and a deposition amount of the silicon-based particles inside the negative electrode active material. A particle size of the wave absorbing material may be controlled within a given range to further facilitate even distribution of the wave absorbing material and the silicon-based particles inside the negative electrode active material, and increase a deposition amount of silicon inside the negative electrode active material, which improve a gram capacity and kinetic performance of the negative electrode active material.

In some embodiments of this application, the wave absorbing material may include one or more of a metal elementary substance, an alloy, a metal oxide, a composite metal oxide, a carbide, or a sulfide. For example, the wave absorbing material may include, but is not limited to, silicon carbide, iron, copper, zinc, calcium, titanium, chromium, a related derivative thereof (for example, an alloy, a metal oxide such as FeO, Fe₃O₄, Fe₂O₃, or ZnO, or a composite metal oxide such as LaFeO₃ or LaSrFeO₃), and an oxide such as MoO₂, NiO, TiO₂, Co₃O₄, or WO₃. Optionally, the wave absorbing material may include one or more of an iron elementary substance, an iron-containing alloy, and an iron-containing oxide, for example, may include one or more of Fe, FeO, Fe₃O₄, and Fe₂O₃. A manufacturing process of an iron-containing wave absorbing material within the given range is that in-situ metal ions are heated and converted into a metal oxide whose particles have a small particle size (where an average particle size is usually not greater than 100 nm, and optionally, ranges from 20 nm to 50 nm) and are dispersed inside the porous carbon skeleton layer (where some of the particles are nanometer-level particles). The wave absorbing material and the porous carbon material in a composite structure both have a wave absorbing capability, so that the electromagnetic synergy may be used to improve impedance matching of the wave absorbing material and the carbon material after the wave absorbing material and the carbon material are compounded, to improve electromagnetic-wave absorbing performance. In addition, the particle size of the iron-containing wave absorbing material within the given range is small, and a quantity of atoms on a surface is large, so that surface activity of the material is increased, and the material has good magnetic permeability. Under radiation of a microwave field, motion of atoms and electrons is intensified, so that magnetization can be facilitated to convert electric energy into thermal energy, and in turn, capabilities of an overall composite material for absorbing, attenuating, and converting electromagnetic waves are enhanced. Therefore, precise heating at a particular location is further improved, and even and directional deposition of more silicon inside the negative electrode active material, especially, in the pores of the multi-layered carbon skeleton layer is facilitated, so that both the gram capacity and the kinetic performance of the negative electrode active material are improved.

In some embodiments of this application, the silicon-based particles include, but is not limited to, one or more of a silicon elementary substance, a silicon oxide material, and a silicon carbon material. The silicon-based particle within the given range has a high capacity, so that the overall gram capacity of the negative electrode active material can be improved, and the energy density of the battery can be improved.

In some embodiments of this application, based on the mass of the negative electrode active material, a content of the silicon-based particles may range from 30wt% to 70wt%, for example, may be 35wt%, 40wt%, 45wt%, 50wt%, 55wt%, 60wt%, 65wt%, or the like, or may be a range including any of the foregoing values. The content of the silicon-based particles in the negative electrode active material may be obtained through an ICP test. Specifically, the content may be measured with reference to the EPA 6010D-2014 standard. For example, an elemental analysis-inductively coupled plasma optical emission spectrometry (ICP-OES) test may be used. First, a to-be-measured solid is dissolved into a liquid by using strong acid, and the liquid is then introduced to an ICP light source through atomization. Further, after being ionized and excited in a strong magnetic field, the to-be-measured gaseous atoms are restored from an excited state to a ground state. Energy is released in the foregoing process and is recorded as different feature spectral lines for quantitative analysis of trace elements. An increase in the content of the silicon-based particles helps increase the overall gram capacity of the negative electrode active material. Limiting the content of the silicon-based particles within a proper range may reduce a risk that an excessively high content of the silicon-based particles easily causes an overall expansion amount of the negative electrode active material in a charge and discharge cycle to exceed a regulation limit of a core-shell composite structure of the negative electrode active material, affecting the cycle performance. The content of the silicon-based particles in the negative electrode active material is controlled within the given range, so that both the gram capacity and the cycle stability of the negative electrode active material can be taken into account, and the energy density and the cycle performance of the battery are improved. Optionally, based on the mass of the negative electrode active material, the content of the silicon-based particles may range from 30wt% to 50wt%. This condition is controlled, so that both the gram capacity and the cycle stability of the negative electrode active material can be further taken into account, and the energy density and the cycle performance of the battery are improved.

In some embodiments of this application, a porosity of the porous carbon skeleton layer 20 may range from 40% to 70%, for example, may be 43%, 46%, 49%, 52%, 55%, 58%, 61%, 64%, 67%, or the like, or may be a range including any of the foregoing values. An increase in the porosity of the porous carbon skeleton layer helps improve dispersion evenness of the silicon-based particles in the porous carbon skeleton layer, and also helps increase a silicon deposition amount inside the negative electrode active material, to improve a limiting effect of the porous carbon skeleton layer on expansion of the silicon-based particles. Reducing the porosity of the porous carbon skeleton layer helps reduce lithium supplementation impact on overall strength of the negative electrode active material, and reduce a risk that the overall structure easily collapses. The porosity of the porous carbon skeleton layer is controlled within the given range, so that not only overall strength of the negative electrode active material can be taken into account, but also both the gram capacity and the cycle stability of the negative electrode active material can be taken into account, and the energy density and the cycle performance of the battery are improved.

In some embodiments of this application, a pore diameter of the porous carbon skeleton layer 20 may be 1 nm to 50 nm, for example, may be 5 nm, 10 nm, 15 nm, 20 nm, 25 nm, 30 nm, 35 nm, 40 nm, or 45 nm, or may be a range including any of the foregoing values. Increasing the pore diameter of the porous carbon skeleton layer not only can reduce difficulty of depositing silicon inside the negative electrode active material, especially, in the pores of the porous carbon skeleton layer, but also help improve the limiting effect of the porous carbon skeleton layer on expansion of the silicon-based particles. In addition, limiting the pore diameter of the porous carbon skeleton layer within the given range helps improve dispersion evenness of the silicon-based particles in the porous carbon skeleton layer. Controlling the pore diameter of the porous carbon skeleton layer within the given range can further help improve both the gram capacity and cycle structure stability of the negative electrode active material, and the energy density and the cycle performance of the battery are improved.

In some embodiments of this application, a Dv50 particle size of the negative electrode active material may be not greater than 10 µm (for example, may be not greater than 9 µm, 8 µm, 7 µm, 6 µm, 5 µm, 4 µm, 3 µm, or the like, or may be a range including any of the foregoing values). A Dv90 particle size of the negative electrode active material may be not greater than 20 µm (for example, may be not greater than 18 µm, 17 µm, 15 µm, 14 µm, 13 µm, 12 µm, 11 µm, 10 µm, 9 µm, 8 µm, or 5 µm, or may be a range including any of the foregoing values). The Dv50 particle size and the Dv90 particle size of the negative electrode active material may be respectively measured by using a laser particle size analyzer (for example, Malvern Master Size 3000) with reference to the standard GB/T 19077.1-2016. Controlling the particle size of the negative electrode active material within the low range helps reduce a risk that transmission of active ions, such as lithium ions, is easily blocked due to an excessively large particle size of the negative electrode active material, affecting battery performance. Controlling the Dv50 particle size and the Dv90 particle size of the negative electrode active material within the given ranges helps improve conductivity of a negative electrode plate and an effect of improving the battery performance. Further, the Dv50 particle size of the negative electrode active material may also be not less than 1 µm, and the Dv90 particle size may be not less than 3 µm. Controlling the particle size of the negative electrode active material to satisfy the given condition helps avoid a large quantity of side reactions with an electrolyte solution due to an excessively small particle size of the negative electrode active material, affecting the effect of improving the battery performance.

In some embodiments of this application, a thickness of the carbon cladding layer 30 may be not greater than 1 µm, for example, may be 0.02 µm, 0.05 µm, 0.08 µm, 0.1 µm, 0.15 µm, 0.2 µm, 0.25 µm, 0.3 µm, 0.3 µm, 0.4 µm, 0.45 µm, 0.5 µm, 0.55 µm, 0.6 µm, 0.65 µm, 0.7 µm, 0.8 µm, 0.9 µm, 1 µm, or the like, or may be a range including any of the foregoing values. For the thickness of the carbon cladding layer, reference may be made to JY/T010-1996. First, particles of the negative electrode active material are polished and sectioned, cross-sectional structures thereof are observed, regional component are determined, and data of a cladding thickness is further obtained. Specifically, a layered boundary of a cross section of the particles of the negative electrode active material may be observed based on a polished cross-sectional morphology (CP morphology) of the particles, a thickness of an outermost cladding layer of the particles is further observed by using a transmission electron microscope, and values at different locations of the particles at a center of a field of view are recorded to calculate an average value. When the carbon cladding layer is arranged, not only volume expansion of the silicon-based particle in a charge and discharge cycle may be further limited, but also conductivity of the negative electrode active material may be improved. An increase in the thickness of the carbon cladding layer helps improve the conductivity of the negative electrode active material and the limiting effect of the negative electrode active material on the volume expansion of the silicon-based particles during a charge and discharge cycle. A decrease in the thickness of the carbon cladding layer helps reduce possible lithium supplementation impact on the overall gram capacity of the negative electrode active material, and can limit a function of ion intercalation/deintercalation of the carbon cladding layer, to reduce a risk that a capacity of the negative electrode active material easily fades quickly because the carbon cladding layer implements the function of ion intercalation/deintercalation more, and consequently, an effect of improving the cycle stability of the negative electrode active material is poor, and power performance and the cycle performance of the battery are affected. Controlling the thickness of the carbon cladding layer within the given range can improve the gram capacity of the negative electrode active material, and improve the conductivity of the negative electrode active material and reduce the volume expansion caused during a charge and discharge cycle. Optionally, the thickness of the carbon cladding layer 30 may be not greater than 0.2 µm, further optionally, may be not greater than 0.1 µm, and still further optionally, may range from 0.05 µm to 0.08 µm. When the thickness of the carbon cladding layer is controlled within the given range, the gram capacity of the negative electrode active material, and volume stability, conductivity, and a cycle life of the negative electrode active material in a charge and discharge process can all be considered.

In some embodiments of this application, a particle size of the carbon core 10 may range 1 µm to 5 µm, and for example, may be 1.5 µm, 2 µm, 2.5 µm, 3 µm, 3.5 µm, 4 µm, 4.5 µm, or the like, or may be a range including any of the foregoing values. The particle size of the carbon core may be obtained by observing the cross-sectional morphology of the particle, recording particle sizes of the particles in the field of view, counting, and calculating the average value. The particle size of the carbon core is controlled within the given range based on the particle size of the negative electrode active material and the thickness of the carbon cladding layer, so that both structural stability and the gram capacity of the overall negative electrode active material may be further taken into account, to improve the conductivity of the negative electrode active material and reduce the volume expansion caused during a charge and discharge cycle.

In some embodiments of this application, the carbon core may include one or more of graphite, porous carbon, and mesophase carbon microspheres (MCMB). Selecting the graphite, the porous carbon, and the mesophase carbon microspheres as a material of the carbon core better helps intercalation and deintercalation of active ions (such as lithium ions), and helps improve the cycle performance and a fast charging capability. The graphite may include artificial graphite and/or natural graphite, and optionally, be artificial graphite. The porous carbon may include, but is not limited to, hard carbon. The hard carbon may include, but is not limited to, carbon black, and pyrolytic carbon obtained by using a resin (such as phenolic resin) and/or another organic polymer as a precursor. Optionally, the porous carbon may include hard carbon. Compared with the graphite and the mesophase carbon microspheres, the hard carbon has a high specific capacity. Using the hard carbon as the carbon core helps further improve the gram capacity of the negative electrode active material and improve the energy density of the battery.

In some embodiments of this application, it may be understood that carbon precursor materials used to form the porous carbon skeleton layer and the carbon cladding layer are not specifically limited, and may be flexibly selected by a person skilled in the art based on an actual requirement. For example, the carbon precursor materials used to form the porous carbon skeleton layer and the carbon cladding layer may respectively and independently include one or more of bitumen, a resin, a soluble starch, sucrose, glucose, and polyacrylate.

In some embodiments of this application, referring to FIG. 2 for understanding, the negative electrode active material may further include a carbon core cladding layer 11. The carbon core cladding layer 11 is cladded on at least a part of an outer surface of the carbon core 10 and located in the accommodation space. The wave absorbing material may be distributed in the carbon core cladding layer 11. In a preparation process in which this configuration is used, a central thermal field may be formed on a surface of the carbon core, so that a wave absorbing effect inside the overall negative electrode active material is better, to further facilitate deposition of silicon inside the entire negative electrode active material, reduce a content of silicon on a surface of the negative electrode active material, and improve a limiting effect of the negative electrode active material on the volume expansion of the silicon-based particles during a charge and discharge cycle.

In some embodiments of this application, a mass fraction of the wave absorbing material in the carbon core cladding layer 11 may be greater than a mass fraction of the wave absorbing material in the porous carbon skeleton layer 20. In a preparation process of the negative electrode active material, use and arrangement of this structure help preferentially heat inside, to form a state in which an internal temperature is higher than an external temperature. This helps first deposit silicon inside, and then gradually deposit silicon outside. Silicon contents gradually decrease from the inside to the outside, to facilitate deposition of more silicon inside the porous carbon skeleton layer, so that a silicon deposition amount on a side close to the carbon core is greater than a silicon deposition amount on a side close to the carbon cladding layer in the porous carbon skeleton layer. Therefore, not only the content of silicon on the surface of the negative electrode active material is further reduced, but also an effect of improving a volume effect of the silicon-based particles by the porous carbon skeleton layer and the carbon cladding layer can be further improved. Both the porous carbon skeleton layer and the carbon cladding layer help improve the structural stability of the negative electrode active material during cycling, and the energy density and the cycle performance of the battery are improved.

In some embodiments of this application, a thickness of the carbon core cladding layer 11 may be not greater than 1 µm, for example, may be 0.1 µm, 0.2 µm, 0.3 µm, 0.4 µm, 0.5 µm, 0.6 µm, 0.7 µm, 0.8 µm, 0.9 µm, 1 µm, or the like, or may be a range including any of the foregoing values. The thickness of the carbon core cladding layer may be obtained by cutting a material in vacuum by using an Ar ion beam, directly observing a cross-sectional morphology, identifying a layered object on the surface of the carbon core, selecting particles to test thicknesses of a plurality of points, and obtaining an average value. The thickness of the carbon core cladding layer is controlled within the given range, so that deposition of more silicon inside the negative electrode active material is facilitated, and the cycle performance is improved, based on which the gram capacity of the entire negative electrode active material can be further taken into account. Optionally, the thickness of the carbon core cladding layer 11 may range 0.3 µm to 1 µm, and further optionally, range from 0.3 µm to 0.5 µm.

In some embodiments of this application, a resistivity of the negative electrode active material at room temperature and a pressure of 4 Mpa may range from 100 Ω·cm to 10000 Ω·cm, for example, may be 100 Ω·cm, 120 Ω·cm, 150 Ω·cm, 200 Ω·cm, 250 Ω·cm, 300 Ω·cm, 350 Ω·cm, or 400 Ω·cm, or the like, or may be a range including any of the foregoing values. The resistivity of the negative electrode active material may be measured by using a powder resistivity & a compaction densitometer (where for example, a model may be PRCD2100, Initial Energy Science & Technology). Specific operations may include: weighing a sample of a particular mass at room temperature, adjusting a depth of a feeding cavity, adding the sample to the feeding cavity, applying pressure, manually collecting data, and recording resistivity testing results of sample powder at different pressure points. In this embodiment of this application, a resistivity of the sample powder at 4 Mpa may be emphatically recorded and inspected. The kinetic performance of the negative electrode active material may be further improved by improving an ion conductivity rate of the negative electrode active material. Optionally, the resistivity of the negative electrode active material at room temperature and the pressure of 4 Mpa may range from 100 Ω·cm to 300 Ω·cm. The resistivity of the negative electrode active material is controlled within the given range, so that a volume effect and the cycle performance of the negative electrode active material are improved, based on which the kinetic performance can be further improved.

According to a second aspect of this application, a preparation method for the negative electrode active material according to the first aspect of this application is provided. The method includes: mixing a carbon core material, a pore-forming agent, a carbon skeleton precursor material, and a solvent, to obtain a first mixed liquid; mixing a wave absorbing material with the first mixed liquid, to obtain a second mixed liquid; performing spray forming and fluidized drying treatment on the second mixed liquid, to obtain composite particles; carbonizing and activating the composite particle, to obtain skeleton particles of a porous carbon skeleton layer covering a carbon core; performing microwave heating on the skeleton particles, and introducing a gas-phase silicon source to deposit silicon, to obtain precursor particles; and cladding at least a part of an outer surface of the precursor particles with a carbon cladding layer, to obtain the negative electrode active material.

In comparison with a problem in a conventional process mode of performing heat treatment on the negative electrode active material that "it is very difficult to control a status of a finished product of a silicon-carbon composite material, a high temperature is required, sintering duration is long, a large amount of energy needs to be consumed, and not only a large amount of energy needs to be consumed, but also it is difficult for silicon in the silicon-carbon composite material to enter into a carbon skeleton, resulting in many silicon grains existing on the surface of the material, easily causing a serious expansion problem during cycling of the battery directly affecting stability of a structure of a silicon-based material, and finally affecting cycle performance", in this embodiment of this application, the wave absorbing material is added in a preparation process, so that a wave band of the wave absorbing material may be coupled to a basic fine structure of the material to generate heat, to precisely heat a particular location of the material, and advantages, such as a high temperature rising speed, high energy utilization, high heating efficiency, safety, hygiene, and non-pollution, are achieved. In addition, in comparison with an outside-to-inside heat transfer process in a conventional heating process, a heating temperature and heating duration can further be effectively reduced through self-heating, non-gradient overall heating, and a high temperature rising speed of the wave absorbing material, to improve a production rate, reduce costs, and improve product quality. More importantly, more silicon is enabled to be deeply deposited in pores of the porous carbon skeleton layer, to effectively limit volume expansion of silicon, and maintain structural stability of the silicon-based particle during long-term cycling. Further, a composite core-shell structure is obtained by further forming the carbon cladding layer, so that structures of the layers interact with each other, thereby further limiting expansion of the internal silicon-based particle and improving the cycle performance of the battery. In conclusion, the preparation method for a negative electrode active material in this application has at least the following beneficial effects: A preparation process is controllable, and precise heating may be performed by using the wave absorbing material and through microwave heating, to implement directional distribution of silicon, and obtain the negative electrode active material of an expected structure. In addition, the method further helps reduce a heating temperature and heating duration in a preparation process, improve production efficiency, and reduce costs. In addition, the prepared negative electrode active material can effectively limit volume expansion of silicon, to improve structural stability of the negative electrode active material during cycling.

In some embodiments of this application, a carbon core material (for example, hard carbon material), a pore-forming agent, a carbon skeleton precursor material (for example, phenolic resin), and a solvent (for example, optionally, a volatile solvent) are mixed, to obtain a first mixed liquid. In this process, the carbon skeleton precursor material is mixed with the carbon core material, to help later form the porous carbon skeleton layer on a surface of a material of the carbon core. Optionally, the carbon skeleton precursor material and the pore-forming agent may be sufficiently dissolved in the solvent, to better help form the porous carbon skeleton layer on the surface of a material of the carbon core. Addition of the pore-forming agent may form a porous structure in the later formed carbon skeleton layer, to help subsequent deposition of silicon. It may be understood that specific types of the pore-forming agent and the solvent are not specifically limited, provided that a related effect can be achieved, and a person skilled in the art can flexibly select the pore-forming agent and the solvent based on an actual requirement. For example, the pore-forming agent may include one or more of sodium chloride, potassium chloride, zinc chloride, sodium carbonate, potassium carbonate, zinc carbonate, zinc acetate, and ammonium ethanoate. The solvent includes, but is not limited to, water and/or alcohol. For example, the solvent may be a mixture of water and alcohol, that is, an alcohol solution. The alcohol includes, but is not limited to, methanol, ethanol, ethylene glycol, polyethylene glycol, glycerol, isopropyl alcohol, or polyol. In some specific examples, the hard carbon material, the phenolic resin, the zinc chloride, and an ethanol aqueous solution may be sufficiently mixed to obtain the first mixed liquid. In addition, relative dosages of the carbon core material and the carbon skeleton precursor material may be flexibly selected based on actual situations such as an expected obtained core-shell structure size of the negative electrode active material and a type of a core-shell material, and are not specifically limited herein. Related features, such as a type of the carbon core material, the particle size, and a type of the carbon skeleton precursor material, are described in the foregoing part, and details are not described herein again.

In some embodiments of this application, a mass ratio of the pore-forming agent to the carbon skeleton precursor material may be (10 to 1):(1 to 100), for example, may be 5/1, 3/1, 2/1, 1.5/1, 5/4, 1/1, 0.5/1, 2/5, 1/3, 1/2, 1/5, 1/10, 1/15, 1/20, 1/30, 1/40, 1/50, 1/60, 1/70, 1/80, 1/90, or the like, or may be a range including any of the foregoing values. A dosage of the pore-forming agent has impact on a porosity and a pore diameter of the finally formed porous carbon skeleton layer to some extent. Controlling the dosage of the pore-forming agent within the given range can further help obtain the porous carbon skeleton layer having an expected porosity and a micro-mesoporous porous structure. Optionally, the mass ratio of the pore-forming agent to the carbon skeleton precursor material may be (10 to 1):(2 to 10), for example, may be 1:(2 to 10), further optionally, may be (10 to 1):(2 to 5), for example, 1:(2 to 5). This may further help improve the porosity and the pore diameter of the carbon skeleton layer, optimize distribution and a deposition amount of silicon inside the negative electrode active material and a limiting effect of an overall structure of the negative electrode active material on expansion of the silicon-based particles, to improve a gram capacity and cycle performance of the negative electrode active material.

In some embodiments of this application, a sum of a mass fraction of the pore-forming agent and a mass fraction of the carbon skeleton precursor material in the first mixed liquid may range from 10wt% to 70wt%, for example, may be 15wt%, 20wt%, 25wt%, 30wt%, 35wt%, 40wt%, 45wt%, 50wt%, 55wt%, 60wt%, 65wt%, or the like or may be a range including any of the foregoing values. In an actual preparation process, based on the structure of the negative electrode active material, a dosage of the carbon core material is less than that of the carbon skeleton precursor material. In addition, to conveniently form the porous carbon skeleton layer, it is expected that the pore-forming agent and the carbon skeleton precursor material can be completely dissolved in the solvent. Based on this, the mass fraction of the pore-forming agent and the mass fraction of the carbon skeleton precursor material in the first mixed liquid are controlled to satisfy the given ranges, to further help form the porous carbon skeleton layer on a surface of the carbon core. In addition, a thickness of the porous carbon skeleton layer may be flexibly controlled by adjusting the mass fraction of the pore-forming agent and the mass fraction of the carbon skeleton precursor material in the first mixed liquid, to further help obtain a negative electrode active material of an expected structural size.

In some embodiments of this application, in a process in which a wave absorbing material is mixed with the first mixed liquid to obtain a second mixed liquid, a particle size of the wave absorbing material may be controlled at a nanometer-level. For example, Fe₃O₄ nanoparticles may be mixed with the first mixed liquid. For a carbon core material having a micrometer-level size, selecting the nanometer-level wave absorbing material not only helps distribute the wave absorbing material more in the later formed carbon skeleton layer, but also helps improve distribution evenness of the wave absorbing material in the carbon skeleton layer. In addition, because a particle size of the nanoparticles is small, surface activity of the wave absorbing material can be improved, thereby improving wave absorbing performance. It should be noted that for a dosage, a type, and the like of the wave absorbing material, related descriptions have been provided in the descriptions of the negative electrode active material according to the first aspect of this application, and details are not described herein again.

In some embodiments of this application, before the first mixed liquid is prepared, the method may further include: cladding at least a part of an outer surface of the carbon core material with a carbon core cladding layer. The wave absorbing material is distributed in the carbon core cladding layer. For example, the wave absorbing material or a precursor material of the wave absorbing material may be attached to a surface of the carbon core material by using a liquid phase method, and the carbon core cladding layer may be formed through a related post-treatment process. For example, Fe₃O₄ is used as the wave absorbing material of the carbon core cladding layer. The carbon core material, soluble base salt, and water may be mixed to obtain an alkaline dispersant, and then the alkaline dispersant is mixed with soluble iron salt to perform a hydrothermal reaction and heat treatment, to form the carbon core cladding layer having a structure similar to that of the porous carbon skeleton layer on the surface of the carbon core material. After the alkaline dispersant is mixed with the wave absorbing material or the precursor materials of the wave absorbing material, post-treatment may further be performed based on an actual situation, to obtain the carbon core cladding layer having the structure similar to that of the porous carbon skeleton layer.

In some specific embodiments, when the carbon core cladding layer is formed, ultrasonic dispersion may be performed on the carbon core material (for example, hard carbon) in deionized water, and NaOH is added to adjust the mixed liquid to be slightly alkaline. For example, a pH value of the mixed liquid may be adjusted to approximately 9, and optionally, 9±1. Then, ferric iron salt and/or a hydrate (for example, FeCl₃•6 H₂O) thereof are added to continue low-temperature ultrasonic dispersion. After the mixed liquid is evenly dispersed, a reducing agent (for example, hydrazine) is added to perform the hydrothermal reaction. Then, cooling is performed, and a reaction product is cleaned and dried, and sintered in a nitrogen atmosphere, to obtain the carbon core including a porous cladding layer. The porous cladding layer includes the wave absorbing material Fe₃O₄. Sintering in a nitrogen atmosphere can effectively avoid or suppress a problem that the carbon core material is sensitive to oxygen and is prone to oxidation and ablation at a high temperature. In addition, compared with Fe₃O₄, the wave absorbing material Fe₃O₄ formed by using the soluble iron salt as a precursor can help further improve dispersion evenness of the wave absorbing material on a surface of the carbon core, and help obtain the wave absorbing material with a nano-particle size. It should be noted that, a specific operation process of controlling the carbon core cladding layer to be formed on the surface of the carbon core material and a control process parameter may be flexibly selected based on an actual requirement such as a type of a selected wave absorbing material, and are not specifically limited herein. In addition, other related features and effects of forming, on the surface of the carbon core material, the carbon core cladding layer including the wave absorbing material are described in the foregoing part, and details are not described herein again.

In some embodiments of this application, when the carbon core cladding layer is formed on the surface of the carbon core material, a mass ratio of the wave absorbing material to the carbon core material may be 1:(5 to 20), for example, may be 1/6, 1/7, 1/8, 1/9, 1/10, 1/11, 1/12, 1/13, 1/14, 1/15, 1/16, 1/17, 1/18, 1/19, or the like or may be a range including any of the foregoing values. When an amount of the wave absorbing material in the carbon core cladding layer is controlled within the given range, the carbon core cladding layer on the surface of the carbon core material may include sufficient wave absorbing material, so that more silicon is deeply deposited in the pores of the porous carbon skeleton layer. In addition, it helps avoid a case that the wave absorbing material agglomerates into a macromolecule on the surface of the carbon core material when the amount of the wave absorbing material is excessively large, affecting dispersion evenness and a wave absorbing effect of the wave absorbing material on the surface of the carbon core material, to further facilitate even and directional deposition of silicon, and improve the cycle performance of the negative electrode active material.

In some embodiments of this application, in a process in which spray forming and fluidized drying treatment are performed on the second mixed liquid, and the obtained composite particles are carbonized and activated, specific process conditions for controlling spray forming, fluidized drying treatment, carbonization, and activation may be flexibly selected based on an actual requirement, and are not specifically limited in this embodiment of this application. For example, the second mixed liquid may be atomized and solidified into spherical particles at a condition of being not less than 100°C, and then the step of fluidized drying is performed, to stabilize a surface of a resin and reduce sticking between the particles. Then, the collected spherical particles are sintered and carbonized, and then the sintered and carbonized product is activated by introducing overheated water stream. Optionally, a temperature of carbonization may range from 700°C to 1600°C, a temperature of activation may range from 700°C to 1200°C, and duration may optionally range from 0.5 h to 10 h. Controlling conditions of carbonization and activation within the given ranges may further facilitate forming of a composite structure in which the porous carbon skeleton layer is cladded on the carbon core.

In some embodiments of this application, when microwave heating is performed on the skeleton particle, and the gas-phase silicon source is introduced to deposit silicon, a frequency setting range and heating duration of microwave treatment may be flexibly selected based on a type of the wave absorbing material. For example, a microwave frequency range may be set to 8.0 GHz to 12.4 GHz to implement fixed-point heating with an absorptivity range of 12 dB to 16 dB. The wave absorbing material converts a wavelength in the frequency-band range into thermal energy, and the heating duration is adjusted based on a silicon deposition amount. Further, a specific type of the gas-phase silicon source is not specifically limited herein, and may be flexibly selected based on an actual requirement. For example, the gas-phase silicon source may be gas-phase silane. In addition, the microwave heating duration and a flow rate of the gas-phase silicon source per unit time can be flexibly adjusted based on an expected deposition amount of solicon inside the negative electrode active material.

In some embodiments of this application, when the carbon cladding layer is formed on the surface of the precursor particles obtained by depositing silicon through microwave heating, the precursor particles may be mixed with a precursor material (for example, bitumen) of the carbon cladding layer for heat treatment, to obtain the negative electrode active material in which the carbon cladding layer is cladded on at least a part of the outer surface of the precursor particles. Optionally, when the carbon cladding layer is formed, a temperature of heat treatment may range from 800°C to 1150°C, and duration may range from 1 h to 5 h. It should be noted that, when the precursor particles are mixed with the precursor material of the carbon cladding layer, a used cladding may be bitumen, a resin, a gas-phase CVD cladding, or the like. Relative amounts of the precursor particles and the precursor materials of the carbon cladding layer may be flexibly selected based on an actual situation such as an expected structural size of a negative electrode active material, and are not specifically limited herein.

According to a third aspect of this application, a negative electrode plate is provided, including the negative electrode active material according to the first aspect of this application, and/or a negative electrode active material prepared by using the preparation method for a negative electrode active material according to the second aspect of this application. It should be noted that features and effects described for the negative electrode active material according to the first aspect of this application and the preparation method for a negative electrode active material according to the second aspect of this application are also applicable to the negative electrode plate, and details are not described herein again. In general, structure stability of the negative electrode plate is better during a charge and discharge cycle, to help reduce safety risks such as battery bulging.

In some embodiments of this application, the negative electrode plate may include a negative electrode current collector and a negative electrode active material layer arranged on at least one layer of the negative electrode current collector. An active material in the negative electrode active material layer may be partially or completely the negative electrode active material according to the first aspect of this application. In addition, in addition to the active material, the negative electrode active material layer may further include a conductive agent and a binder. Relative dosages of the active material, the conductive agent, and the binder, a content of the negative electrode active material according to the first aspect of this application in the active material, specific types of the conductive agent and the binder, a material of the negative electrode current collector, a thickness, compacted density, or areal density of the negative electrode active material layer, and the like may be flexibly selected based on an actual situation, and are not specifically limited herein.

According to a fourth aspect of this application, a battery is provided, including the negative electrode active material according to the first aspect of this application, and/or a negative electrode active material prepared by using the preparation method for a negative electrode active material according to the second aspect of this application, and/or the negative electrode plate according to the third aspect of this application. Optionally, the battery may be a secondary battery. Optionally, the battery may be a lithium-ion battery.

In comparison with a conventional battery, the negative electrode active material according to the first aspect of this application, and/or a negative electrode active material prepared by using the preparation method for a negative electrode active material according to the second aspect of this application, and/or the negative electrode plate in the third aspect of this application are used, to help improve cycle performance and energy density of the battery. In addition, it may be understood that features and effects described for the negative electrode active material according to the first aspect of this application, and/or a negative electrode active material prepared by using the preparation method for a negative electrode active material according to the second aspect of this application, and/or the negative electrode plate according to the third aspect of this application are also applicable to the battery in the fourth aspect of this application, and details are not described herein again.

In addition, in addition to the negative electrode plate, the battery usually further includes a positive electrode plate, a separator, an electrolyte solution, and a housing assembly. The electrode plates, the separator, and the electrolyte solution are located in an accommodating cavity formed by the housing assembly. According to different types of batteries, the housing component may be an aluminum plastic film, a metal housing component, or the like. The metal housing component may further include a square housing component and a cylindrical housing component. Any type of battery including the negative electrode active material in the first aspect of this application, and/or a negative electrode active material prepared by using the preparation method for a negative electrode active material according to the second aspect of this application, and/or the negative electrode plate according to the third aspect of this application may be understood as being included in the technical scope of the battery according to the fourth aspect of this application. A feature of the negative electrode plate is described in the foregoing part, and details are not described herein again. A structure and a composition of the positive electrode plate, and a specific material or type of the separator may be those commonly selected in the art. A composition of the electrolyte solution may also be that commonly selected in the art, and a person skilled in the art may flexibly select the composition based on an actual requirement.

In some implementations of this application, the battery may be a laminated battery, or may be a winded battery. The winded battery may be a square battery (referring to FIG. 3 for understanding), may be a cylindrical battery, or may have any other shape. Based on different battery types, the positive electrode plate, the negative electrode plate, and the separator not only may be arranged in a stacked manner to form a laminated unit, but also may be stacked and then winded, to form a winding body.

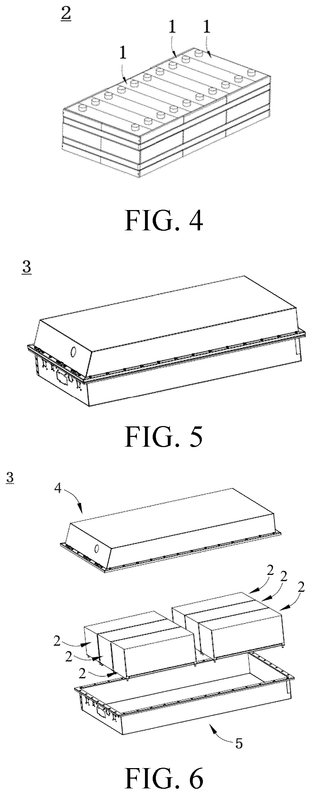

In some implementations of this application, the battery may be a battery cell 1 (referring to FIG. 3 for understanding), or may be a battery module 2 (referring to FIG. 4 for understanding) or a battery packet 3 (referring to FIG. 5 for understanding) that includes the battery cell 1.

In some implementations of this application, the battery may be a battery module, and a quantity of battery cells included in the battery module may be one or more. The specific quantity may be adjusted based on application and a capacity of the battery module. FIG. 4 shows a battery module 2 as an example. Referring to FIG. 4, in the battery module 2, a plurality of battery cells 1 may be sequentially arranged along a length direction of the battery module 2. Certainly, arrangement may alternatively be performed in any other manner. Further, the plurality of battery cells 1 may be fixed by using a fastener. Optionally, the battery module may further include a packaging component having an accommodation space. The packaging component may include a bottom plate, a side plate, and a cover plate. The plurality of battery cells 1 are accommodated in the accommodation space.

In some implementations of this application, the battery modules may further form a battery pack, and a quantity of battery modules included in the battery pack may be adjusted based on application and a capacity of the battery pack. Referring to FIG. 5 or FIG. 6 (where FIG. 5 and FIG. 6 show a battery package 3 as an example), the battery package 3 may include a battery box and a plurality of battery modules 2 arranged in the battery box. The battery box may include an upper box body 4 and a lower box body 5. The upper box body 4 can cover the lower box body 5, and forms closed space for accommodating the battery module 2. The plurality of battery modules 2 may be arranged in the battery box in any manner.

In addition, this application further provides an electrical device, including the negative electrode active material in the first aspect of this application, and/or a negative electrode active material prepared by using the preparation method for a negative electrode active material according to the second aspect of this application, and/or the negative electrode plate according to the third aspect of this application, and/or the battery according to the fourth aspect of this application.

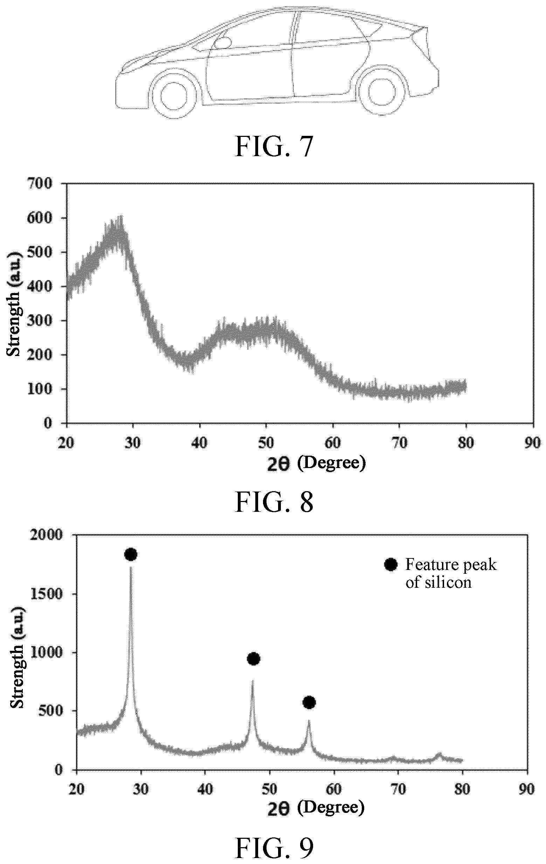

The battery, such as a battery core, a battery module, or a battery packet, not only may serve as a power supply of the electrical device, but also may serve as an energy storage unit of the electrical device. The electrical device may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, and an energy storage system. Referring to FIG. 7 for understanding, in a specific example, the electrical device may be a vehicle.

In the electrical device, a specific type of a battery may be selected based on a use requirement of the electrical device, for example, a battery core, a battery module, or a battery packet may be selected.

In an example, the electrical device may be a pure electric vehicle, a hybrid electric vehicle, or a plug-in hybrid electric vehicle. To meet requirements of the electrical device for a high power and high energy density of a battery, a battery packet or a battery module may be used.

In another example, the electrical device may be a mobile phone, a tablet computer, or a notebook computer. The electrical device usually needs to be light and thin, and a battery core may be used as a power supply.

Examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### Example 1

### (1) Preparation of a positive electrode plate

A positive electrode active material lithium iron phosphate, a conductive agent acetylene black, and a binder polyvinylidene fluoride (PVDF) were mixed according to a mass ratio of 96:2:2, a solvent N-methylpyrrolidone (NMP) was added, and mixing was performed under an action of a vacuum mixer until a system was even, to obtain a positive electrode slurry; the positive electrode slurry was evenly cladded on two surfaces of a positive electrode current collector aluminum foil whose thickness was 12 µm, and was dried for 15 min at 115°C, to obtain, through cold pressing, a single-side positive electrode active material layer whose thickness was 84 µm; and cutting was performed to obtain a positive electrode plate whose length was 605 mm and film width was 88 mm, where a single-side cladding weight was 20 mg/cm², and compaction density of the positive electrode active material layer was 2.4 g/cm³.

### (2) Preparation of a negative electrode active material and a negative electrode plate

### (i) Synthesis of the negative electrode active material:

(a) 50 g of hard carbon whose Dv50 particle size was 3 µm were weighed, and were dispersed in 1000 g of anhydrous ethanol, and then 500 g of phenolic resin and 500 g of anhydrous zinc chloride (Aladdin) were added and mixed to form an even composite resin dilute solvent.
(b) 16 g of nano-Fe₃O₄ powder (whose average particle size was 20 nm) were added to the solvent, and an even dispersant was obtained after ultrasonic treatment was performed for 30 min.
(c) The dispersion was further atomized and solidified into spherical resin particles by using a spray forming process under a condition of 150°C, and then fluidized drying was performed.
(d) The stabilized spherical resin particles were collected, and were heated at a temperature rising speed of 2°C/min to 1000°C and kept at a constant temperature for 2 h for carbonization, and then the carbonized material was activated or 2 h at 800°C while introducing overheated water steam at a water inlet rate of 2 L/min.
(e) A carbon material obtained through activation was heated through microwave heating, where a frequency-band range of microwave treatment was set to 8 GHz to 12.4 GHz, and when a system temperature reaches 500°C, silane gas was introduced to for pyrolysis and silicon deposition.
(f) The obtained material was further mixed with bitumen, where a dosage of bitumen was 5wt% of a mass of the material obtained in step (e), and after heat treatment was performed at 1150°C for 1 h, a silicon-carbon composite negative electrode active material that sequentially includes a carbon core, a porous carbon skeleton layer, and a carbon cladding layer from the inside to the outside was obtained, and a wave absorbing material and silicon-based particles were distributed in pores of the porous carbon skeleton layer.

### (ii) Preparation of the negative electrode plate:

A negative electrode active material (25wt% of the silicon-carbon composite negative electrode active material prepared in step (i)+75wt% of artificial graphite), conductive carbon black, a thickener sodium carboxymethyl cellulose (CMC-Na), and a binder styrene-butadiene rubber (SBR) latex were sufficiently mixed in an appropriate amount of deionized water according to a weight ratio of 96.5:1.0:1.0:1.5, to form an even negative electrode slurry; the negative electrode slurry was cladded on two surfaces of a negative electrode current collector copper foil whose thickness was 8 µm, and a negative electrode plate with a single-side negative electrode active material layer whose thickness was 50 µm and single-side areal density was 8 mg/cm² was obtained after procedures such as drying, where compaction density of the negative electrode active material layer was 1.6 g/cm3.

### (3) Preparation of an electrolyte solution:

Ethylene carbonate (EC), ethyl methyl carbonate (EMC), and diethyl carbonate (DEC) were mixed according to a volume ratio of 1:1:1, to obtain an organic solvent, sufficiently dried lithium salt LiPF6 was dissolved into the organic solvent, where a concentration of the lithium salt was 1 mol/L, and mixing was evenly performed to obtain the electrolyte solution.

### (4) Preparation of a separator

A polyethylene film whose thickness was 12 µm was used as the separator.

### 5. Preparation of a secondary battery

The positive electrode plate, the separator, and the negative electrode plate were sequentially stacked, so that the separator was located between the positive electrode plate and the negative electrode plate to implement separation. A lithium foil was arranged on a surface of a non-reaction region, and then the lithium foil was winded to obtain a bare cell. The bare cell was arranged in an outer package, then the electrolyte solution was injected at a liquid injection coefficient of 4.2 g/Ah, and a secondary battery whose capacity was approximately 3 Ah was obtained through procedures such as vacuum packaging, static disposing, and shaping.

### Example 2

A difference from Example 1 lies in that, when the negative electrode active material was synthesized in (i), step (a) includes:
(a-1) ultrasonic dispersion was performed on 50 g of hard carbons with a particle whose Dv50 was 3 µm in deionized water, and NaOH was added to adjust pH to 9.
(a-2) 15 g of FeCl₃·6H₂O was weighed and poured into a dispersion obtained in (a-1), and low-temperature ultrasonic dispersion continues to be performed.
(a-3) 5 ml of hydrazine was poured into mixed liquid obtained in (a-2), the hydrazine and the mixed liquid were quickly mixed and were even, and were then poured into a hydrothermal kettle, and were heated for 8 h at 140°C in a homogeneous reactor.
(a-4) The liquid was cooled to a room temperature, and a product in the kettle was cleaned by using ethanol and deionized water, and was filtered and dried. The product was arranged in a tubular furnace, reaches 400°C at a temperature rising speed of 10°C/min in nitrogen, and was reacted for 1 h, to obtain hard carbon whose surface was cladded by a cladding layer of wave absorbing material.
(a-5) 50 g of hard carbons obtained in step (a-4) were weighed, and were dispersed in 1000 g of anhydrous ethanol, and then 500 g of phenolic resins and 500 g of anhydrous zinc chloride (Aladdin) were added and mixed to form an even composite resin dilute solvent.

### Comparative example 1

A difference from Example 1 lies in that, when the negative electrode active material was synthesized in (i), step (b) was not included, to be specific, the wave absorbing material Fe₃O₄ was not added when the negative electrode active material was prepared.

### Examples 3 to 8

A difference from Example 1 lies in that, when the negative electrode active material was synthesized in (i), the amount of Fe₃O₄ powders added in step (b) was different. The amount of the wave absorbing material Fe₃O₄ differs based on a mass of the prepared negative electrode active material. For details, refer to Table 1.

### Examples 9 to 11

A difference from Example 1 lies in that, when the negative electrode active material was synthesized in (i), the average particle size of the used wave absorbing material Fe₃O₄ was different. For details, refer to Table 1.

### Examples 12 to 14

A difference from Example 2 lies in that, when the negative electrode active material was synthesized in (I), the amount of FeCl₃·6H₂O was different in step (a-2), and a thickness of a formed carbon core cladding layer was different. For details, refer to Table 1.

### Examples 15 to 19

A difference from Example 1 lies in that, when the negative electrode active material was synthesized in (i), the type of the wave absorbing material was different. For details, refer to Table 1.

### Examples 20 to 23

A difference from Example 1 lies in that, when the negative electrode active material was synthesized in (i), the amount of bitumen used to form the carbon cladding layer was different, and the thickness of the formed carbon cladding layer was different. For details, refer to Table 1.

### Examples 24 to 27

A difference from Example 1 lies in that, when the negative electrode active material was synthesized in (i), in step (a), the amount of the pore-forming agent was different. To be specific, in step (a), the amount of the phenolic resin was controlled to be the same as that in Example 1, but the amount of the pore-forming agent was changed, so that a mass ratio of the two was changed. For details, refer to Table 1.

### Performance test of a secondary battery:

Tests such as a rate charging performance test and a cycle performance test were performed on a secondary battery prepared in the foregoing embodiments and comparative example. A test method includes the following steps.

### 1. Cycle performance test of the secondary battery

The following steps were performed in an environment of 25°C: statically disposing the secondary battery for 5 minutes; discharging the secondary battery to 2.5 V at 0.33 C; statically disposing the secondary battery for 5 minutes; charging the secondary battery to 3.65 V at 0.33 C, and charging the secondary battery to 0.05 C at a constant voltage of 3.65 V; statically disposing the secondary battery for 5 minutes; and discharging the secondary battery to 2.5 V at 0.33 C, and recording a current capacity as C₀'. After the secondary battery was statically arranged for 5 minutes, the secondary battery was transferred to an environment of 45°C, and a charge and discharge cycle was performed according to the following steps: statically disposing the secondary battery for 20 minutes, charging the secondary battery to 3.65 V at 1 C, and charging the secondary battery to 0.05 C at a constant voltage of 3.65 V; statically disposing the secondary battery for 5 minutes; discharging the secondary battery to 2.5 V at 1 C; and statically disposing the secondary battery for 5 minutes. A discharge capacity Cₘ of each circle was recorded, where m represents a quantity of circles, until Cₘ/C₀'×100%=80%, and a value of m in this case was recorded as a cycle life of the secondary battery.

### 2. Test of a thickness increase rate of a negative electrode plate

A prepared negative electrode plate was taken. Before winding, a thickness of the negative electrode plate was measured at a plurality of points (which may be performed by using a polymer film), and an average value was taken and recorded as d₀. After a secondary battery was mounted, in an environment of 25°C, the secondary battery was statically arranged to be at a constant temperature. The secondary battery was charged to 3.65 V at a constant current of 0.33 C, and was charged at a constant voltage of 3.65 V until a current was 0.05 C; and then the secondary battery was discharged to 2.5 V at 0.33 C. After this step was repeated for m cycles, the secondary battery was charged to 3.65 V at a constant current of 0.33 C, and was charged at a constant voltage of 3.65 V until a current was 0.05 C. The battery was disassembled, and the negative electrode plate was taken out. After a surface of the negative electrode plate was dry, locations of the points on the negative electrode plate before winding were determined (which may be performed by using the polymer film), the thickness of the negative electrode plate was measured again at the plurality of points, and an average value was taken and recorded as dₘ. After the m cycles, the thickness increase rate of the negative electrode plate was (dₘ-d₀)/d₀×100%.

### 3. Test of a thickness of a carbon cladding layer and a thickness of a core cladding layer in a negative electrode active material:

Referring to JY/T010-1996, the test includes: 1. Sampling, including: (a) evenly mixing a sampling adhesive (which was obtained by dispersing PVDF in NMP, where a content of PVDF was 8wt%) with a negative electrode active material particle powder according to a mass ratio of 1:5, cladding a compound to a copper foil, and then performing drying at 60°C for 30 min for use; (b) cutting the sample into a size of 6 mm×6 mm by using a scissors and adhering the sample to a CP sample stage, provided that the sample protrudes out of the sample stage by less than 1mm; (c) segmentation: a voltage was 7.5 kV (a balance point between efficiency and quality), and duration was 30 min; and (d) selecting, based on conductivity, whether the sample needs to be gilded: a precursor consumes approximately 60s. 2. Parameter setting: mode: In-lengths, voltage: 10 KV, aperture: 30 µm, and working distance: 4.5 mm. 3. Test procedure: selecting a medium particle or a large particle to be focused inside, and three of the following were shot: 50 K, 30 K, 10 K, 5 K, 3K, 1 K, and 500. 4. In a high-power image, particles in central regions of three to-be-measured regions were selected, five read points were selected for each particle, and then an average value was calculated.

### 4. XRD test, performed with reference to JIS K 0131-1996 (which was a general rule for measurement and analysis of X-ray diffraction).

The negative electrode active materials and the secondary batteries obtained in Example 1 to Example 27 and the comparative example 1 were tested under a same condition. For test results, refer to Table 1. XRD tests were performed on the negative electrode active materials obtained in Example 1 and the comparative example 1. For a result, refer to FIG. 8 and FIG. 9.

**Table 1 Differences and test results of Example 1 to Example 27 and the comparative example 1**

| | Wave absorbing material | Mass fraction of the wave absorbing material in a negative electrode active material | Average particle size of the wave absorbing material | Thickness of a core carbon cladding layer | Mass ratio of a pore-forming agent to a phenolic resin | Thickness of a carbon cladding layer | Thickness increase rate of a negative electrode plate after 500 cycles were performed. | Quantity of cycles corresponding to Cₘ/C₀'×100%=80% |
|---|---|---|---|---|---|---|---|---|
| Example 1 | Fe₃O₄ | 4% | 20 nm | / | 1/1 | 0.08 µm | 160% | 980 |
| Example 2 | Fe₃O₄ | 7.5% | 20 nm | / | 1/1 | 0.08 µm | 120% | 1500 |
| Comparative example 1 | / | / | / | / | 1/1 | 0.08 µm | 257% | 650 |
| Example 3 | Fe₃O₄ | 0.5% | 20 nm | / | 1/1 | 0.08 µm | 210% | 845 |
| Example 4 | Fe₃O₄ | 1% | 20 nm | / | 1/1 | 0.08 µm | 200% | 860 |
| Example 5 | Fe₃O₄ | 3% | 20 nm | / | 1/1 | 0.08 µm | 180% | 900 |
| Example 6 | Fe₃O₄ | 5% | 20 nm | / | 1/1 | 0.08 µm | 120% | 1200 |
| Example 7 | Fe₃O₄ | 7% | 20 nm | / | 1/1 | 0.08 µm | 140% | 930 |
| Example 8 | Fe₃O₄ | 10% | 20 nm | / | 1/1 | 0.08 µm | 180% | 913 |
| Example 9 | Fe₃O₄ | 4% | 10 nm | / | 1/1 | 0.08 µm | 210% | 840 |
| Example 10 | Fe₃O₄ | 4% | 100 nm | / | 1/1 | 0.08 µm | 160% | 983 |
| Example 11 | Fe₃O₄ | 4% | 800 nm | / | 1/1 | 0.08 µm | 240% | 820 |
| Example 12 | Fe₃O₄ | 4.5% | 20 nm | 0.2 µm | 1/1 | 0.08 µm | 160% | 985 |
| Example 13 | Fe₃O₄ | 4.9% | 20 nm | 0.28 µm | 1/1 | 0.08 µm | 158% | 1040 |
| Example 14 | Fe₃O₄ | 6.2% | 20 nm | 0.5 µm | 1/1 | 0.08 µm | 140% | 950 |
| Example 15 | WO₃ | 4% | 20 nm | / | 1/1 | 0.08 µm | 180% | 809 |
| Example 16 | NiO | 4% | 20 nm | / | 1/1 | 0.08 µm | 192% | 920 |
| Example 17 | LaFeO₃ | 4% | 20 nm | / | 1/1 | 0.08 µm | 200% | 850 |
| Example 18 | ZnO | 4% | 20 nm | / | 1/1 | 0.08 µm | 170% | 980 |
| Example 19 | Co₃O₄ | 4% | 20 nm | / | 1/1 | 0.08 µm | 150% | 800 |
| Example 20 | Fe₃O₄ | 4% | 20 nm | / | 1/1 | 0.05 µm | 140% | 590 |
| Example 21 | Fe₃O₄ | 4% | 20 nm | / | 1/1 | 0.10 µm | 126% | 540 |
| Example 22 | Fe₃O₄ | 4% | 20 nm | / | 1/1 | 0.15 µm | 130% | 536 |
| Example 23 | Fe₃O₄ | 4% | 20 nm | / | 1/1 | 0.18 µm | 130% | 550 |
| Example 24 | Fe₃O₄ | 3.5% | 20 nm | / | 1/10 | 0.08 µm | 165% | 960 |
| Example 25 | Fe₃O₄ | 3.8% | 20 nm | / | 1/5 | 0.08 µm | 162% | 970 |
| Example 26 | Fe₃O₄ | 3.8% | 20 nm | / | 2/5 | 0.08 µm | 164% | 963 |
| Example 27 | Fe₃O₄ | 4.0% | 20 nm | / | 6/5 | 0.08 µm | 160% | 977 |

### Result and conclusion:

FIG. 8 and FIG. 9 are successively XRD figures of the negative electrode active materials obtained in Example 1 and the comparison example 1. Strong diffraction peaks shown in the figures are all signals of silicon. It can be seen from the figures that a peak of silicon in the negative electrode active material obtained in the comparative example 1 is more obvious. A reason is analyzed as follows: a wave absorbing agent is stored in a structure of the negative electrode active material obtained in Example 1, to help distribute silicon in a carbon bulk phase, and a diffraction peak of silicon is covered by a carbon. In the comparative example 1, the silicon is not synthesized in a bulk phase and is exposed on a carbon surface. Therefore, a peak of silicon is more obvious.

It can be learned with reference to Example 1 to Example 27, the comparative example 1, and the test results in Table 1 that the negative electrode active material prepared by using the method of the foregoing embodiments of this application has a good effect of improving expansion and cycle performance of a negative electrode. Further, in comparison with that the carbon cladding layer is formed only outside the porous carbon skeleton layer, the carbon core cladding layer including the wave absorbing material and formed outside the carbon core helps further improve the expansion and the cycle performance of the negative electrode. Based on this, a type, an addition amount, and a particle size of the wave absorbing material introduced to the negative electrode active material, a thickness of the carbon cladding layer located outside the porous carbon skeleton layer, a thickness of the core cladding layer, and relative amounts of the pore-forming agent and the carbon skeleton precursor may be further optimized, to further achieve good cycle stability and a good cycle life. In general, as the mass fraction of the wave absorbing material in the negative electrode active material increases, an effect of the wave absorbing material on improving the cycle stability and the cycle life of the negative electrode active material is first improved and then deteriorated. In consideration of terms such as costs and energy density, the mass fraction of the wave absorbing material in the negative electrode active material may be optionally not greater than 10wt%. In addition, as the thickness of the carbon cladding layer increases, although volume expansion of the negative electrode active material may be obviously improved, a problem of a reduced cycle life may be caused. A reason is analyzed as follows: the excessively thick carbon cladding layer may cause an excessively long ion migration path, and excessive ions are only intercalated into and deintercalated from the carbon cladding layer. Consequently, the cycle life is quickly attenuated. Optionally, the thickness of the carbon cladding layer may be not greater than 1 µm, further optionally, may be not greater than 0.1 µm. In addition, when the negative electrode active material is prepared, the relative amounts of the pore-forming agent and the carbon skeleton precursor may also affect, to some extent, the effect of improving the volume expansion and the cycle life of the negative electrode active material. A reason is analyzed as follows: the relative amounts of the pore-forming agent and the carbon skeleton precursor affect the porosity of the porous carbon skeleton layer, and further affect a proportion of the wave absorbing material in the negative electrode active material and the cycle performance of the negative electrode active material.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Especially, as long as there is no structural conflict, the various technical features mentioned in each embodiment can be combined in any way. This application is not limited to the particular embodiments disclosed herein, but includes all technical solutions that fall within the scope of the claims.

## Claims

1. A negative electrode active material, comprising:
a carbon core;
a porous carbon skeleton layer, having an accommodation space inside, wherein the carbon core is located in the accommodation space;
a carbon cladding layer, wherein the carbon cladding layer is cladded on at least a part of an outer surface of the porous carbon skeleton layer; and
a wave absorbing material and silicon-based particles, wherein the wave absorbing material and the silicon-based particles are respectively and independently distributed in a region in which the carbon core is located and a region in which the porous carbon skeleton layer is located.

2. The negative electrode active material according to claim 1, wherein based on a total mass of the wave absorbing material, a content of the wave absorbing material distributed in the porous carbon skeleton layer is not less than 90wt%, and a content of the wave absorbing material distributed in the region in which the carbon core is located is not greater than 10wt%.

3. The negative electrode active material according to claim 1 or 2, wherein based on a mass of the porous carbon skeleton layer, a content of the wave absorbing material ranges from 0.5wt% to 15wt%; and/or
based on a mass of the negative electrode active material, a content of the wave absorbing material is not greater than 10wt%, and optionally, ranges from 3wt% to 8wt%.

4. The negative electrode active material according to any one of claims 1 to 3, wherein the wave absorbing material satisfies at least one of the following conditions: a wave absorbing range is 5.2 GHz to 15.9 GHz, a wave absorbing bandwidth ranges from 8.4 GHz to 10.7 GHz, and a particle size ranges from 20 nm to 500 nm.

5. The negative electrode active material according to any one of claims 1 to 4, wherein the wave absorbing material comprises one or more of a metal elementary substance, an alloy, a metal oxide, a composite metal oxide, a carbide, or a sulfide, and optionally, the wave absorbing material comprises one or more of an iron elementary substance, an iron-containing alloy, and an iron-containing oxide; and/or
the silicon-based particles comprise one or more of a silicon elementary substance, a silicon oxide material, and a silicon carbon material.

6. The negative electrode active material according to any one of claims 1 to 5, wherein based on the mass of the negative electrode active material, a content of the silicon-based particles ranges from 30wt% to 70wt%, and optionally, ranges from 30wt% to 50wt%.

7. The negative electrode active material according to any one of claims 1 to 6, wherein a porosity of the porous carbon skeleton layer ranges from 40% to 70%; and/or a pore diameter of the porous carbon skeleton layer ranges from 1 nm to 50 nm.

8. The negative electrode active material according to any one of claims 1 to 7, wherein at least one of the following conditions is satisfied:
a particle size of the carbon core ranges from 1 µm to 5 µm;
a thickness of the carbon cladding layer is not greater than 1 µm, optionally, is not greater than 0.2 µm, further optionally, is not greater than 0.1 µm, and still further optionally, ranges from 0.05 µm to 0.08 µm; and
a Dv50 particle size of the negative electrode active material is not greater than 10 µm, and a Dv90 particle size of the negative electrode active material is not greater than 20 µm.

9. The negative electrode active material according to any one of claims 1 to 8, wherein the carbon core comprises one or more of graphite, porous carbon, and mesophase carbon microspheres, and optionally, the porous carbon comprises hard carbon; and/or
carbon precursor materials used to form the porous carbon skeleton layer and the carbon cladding layer respectively and independently comprise one or more of bitumen, a resin, a soluble starch, sucrose, glucose, and polyacrylate.

10. The negative electrode active material according to any one of claims 1 to 9, further comprising a carbon core cladding layer, wherein the carbon core cladding layer is cladded on at least a part of an outer surface of the carbon core and located in the accommodation space, and the wave absorbing material is distributed in the carbon core cladding layer.

11. The negative electrode active material according to claim 10, wherein a mass fraction of the wave absorbing material in the carbon core cladding layer is greater than a mass fraction of the wave absorbing material in the porous carbon skeleton layer.

12. The negative electrode active material according to claim 10 or 11, wherein a thickness of the carbon core cladding layer is not greater than 1 µm, optionally, ranges from 0.3 µm to 1 µm, and further optionally, ranges from 0.3 µm to 0.5 µm.

13. The negative electrode active material according to any one of claims 1 to 12, wherein a resistivity of the negative electrode active material at room temperature and a pressure of 4 Mpa ranges from 100 Ω·cm to 10000 Ω·cm, and optionally, ranges from 100 Ω·cm to 300 Ω·cm.

14. A preparation method for the negative electrode active material according to any one of claims 1 to 13, wherein the method comprises:
mixing a carbon core material, a pore-forming agent, a carbon skeleton precursor material, and a solvent, to obtain a first mixed liquid;
mixing a wave absorbing material with the first mixed liquid, to obtain a second mixed liquid;
performing spray forming and fluidized drying treatment on the second mixed liquid, to obtain composite particles;
carbonizing and activating the composite particle, to obtain skeleton particles of a porous carbon skeleton layer covering a carbon core;
performing microwave heating on the skeleton particles, and introducing a gas-phase silicon source to deposit silicon, to obtain precursor particles; and
cladding at least a part of an outer surface of the precursor particles with a carbon cladding layer, to obtain the negative electrode active material.

15. The method according to claim 14, wherein before the first mixed liquid is prepared, the method further comprises: cladding at least a part of an outer surface of the carbon core material with a carbon core cladding layer.

16. The method according to claim 14 or 15, wherein at least one of the following conditions is satisfied:
the pore-forming agent comprises one or more of sodium chloride, potassium chloride, zinc chloride, sodium carbonate, potassium carbonate, zinc carbonate, zinc acetate, and ammonium ethanoate;
a sum of a mass fraction of the pore-forming agent and a mass fraction of the carbon skeleton precursor material in the first mixed liquid ranges from 10wt% to 70wt%; and
a mass ratio of the pore-forming agent to the carbon skeleton precursor material is (10 to 1):(1 to 100), optionally, (10 to 1):(2 to 10), and further optionally, (10 to 1):(2 to 5).

17. A negative electrode plate, comprising the negative electrode active material according to any one of claims 1 to 13, and/or a negative electrode active material prepared by using the method according to any one of claims 14 to 16.

18. A battery, comprising the negative electrode active material according to any one of claims 1 to 13, and/or a negative electrode active material prepared by using the method according to any one of claims 14 to 16, and/or the negative electrode plate according to claim 17.

19. An electrical device, comprising the negative electrode active material according to any one of claims 1 to 13, and/or a negative electrode active material prepared by using the method according to any one of claims 14 to 16, and/or the negative electrode plate according to claim 17, and/or the battery according to claim 18.
